# EUROPÄISCHE PATENTSCHRIFT

(11) **EP 1 948 541 B1**
(45) Veröffentlichungstag und Bekanntmachung des Hinweises auf die Patenterteilung: **26.08.2009**
(21) Anmeldenummer: 06829037.8
(22) Anmeldetag: 14.11.2006
(51) Int. Cl.: B65G 47/31

(54) **KONTINUIERLICHE FÖRDERVORRICHTUNG UND KONTINUIERLICHES FÖRDERVERFAHREN FÜR PLATTENFÖRMIGE WERKSTÜCKE**
CONTINUOUS CONVEYING APPARATUS AND METHOD OF CONTINUOUSLY CONVEYING PLATE-LIKE WORKPIECES
DISPOSITIF DE TRANSPORT CONTINU ET PROCEDE DE TRANSPORT CONTINU DE PIECES EN FORME DE PLAQUES

(30) Priorität: 14.11.2005 DE 102005054210
(43) Veröffentlichungstag der Anmeldung: 30.07.2008
(73) Patentinhaber: Homag Holzbearbeitungssysteme AG, 72296 Schopfloch (DE)
(72) Erfinder: GAUSS, Achim, 72280 Dornstetten/Hallwangen (DE); RATHGEBER, Peter, 72280 Dornstetten (DE)
(74) Vertreter: HOFFMANN EITLE
(86) Internationale Anmeldenummer: PCT/EP2006/010897
(87) Internationale Veröffentlichungsnummer: WO 2007/054361

(56) Entgegenhaltungen:
- WO-A-00/63077
- DE-A1- 2 343 379
- FR-A1- 2 509 703
- US-A- 2 971 630

## Beschreibung

Die vorliegende Erfindung betrifft eine kombination aus einer Holzbearbeitungs durch laufmaschine und einer daren anschließenden Fördervorrichtung sowie ein Förderverfahren für plattenförmige Werkstücke.

### Stand der Technik

Im Bereich der holzbearbeitenden Industrie werden für die Bearbeitung plattenförmiger Werkstücke, z.B. Holz-, Spanplatten oder Laminatplatten aus holzähnlichen Werkstoffen, nacheinander verschiedene Bearbeitungsmaschinen für die jeweilige Bearbeitung (z.B. Bohren, Kantenfräsen, Nutenschneiden, Kantenanleimen etc.) eingesetzt. Zwischen den einzelnen Maschinen oder Stationen werden die Werkstücke dann auf Förderbändern oder ähnlichen Einrichtungen fortbewegt. Zu Zwecken einer schnelleren und genaueren Bearbeitung werden heutzutage in großem Umfang Durchlaufmaschinen eingesetzt, bei denen die Werkstücke ohne angehalten zu werden entlang eines Förderwegs von verschiedenen Bearbeitungswerkzeugen bzw. -aggregaten in den Durchlaufmaschinen bearbeitet werden. In den letzten Jahren ist die hierbei eingesetzte Vorschubgeschwindigkeit stark angestiegen, und Werte von 200 m/min und mehr sind keine Seltenheit. Dies hat natürlich zu einem Wesentlichen Effizienz-Zuwachs und somit zu einer Kostenersparnis geführt, und eine weitere Erhöhung der Vorschubgeschwindigkeiten wird vom Markt angestrebt und gefordert.

Jedoch können nicht alle Bearbeitungsschritte, die an einem Werkstück nacheinander durchzuführen sind, unter der gleichen.

Vorschubgeschwindigkeit durchgeführt werden, so dass einige Bearbeitungsmaschinen mit einer geringeren Vorschubgeschwindigkeit arbeiten. Zudem können entlang des Förderwegs auch Maschinen angeordnet sein, die nicht nach dem Durchlaufprinzip arbeiten, wie zum Beispiel Bearbeitungszentren. Die Fördervorrichtungen, die zwischen den Bearbeitungsstationen die Werkstücke befördern, tragen diesem Umstand Rechnung, indem sie ebenfalls auf der geringeren Vorschubgeschwindigkeit oder ebenso im Taktbetrieb betrieben werden. Somit zwingt die langsamere Bearbeitungsmaschine durch Vermittlung der Fördervorrichtung auch die Maschinen auf dem Förderweg, die schneller arbeiten könnten, entweder mit einer geringeren Vorschubgeschwindigkeit kontinuierlich oder aber getaktet zu arbeiten. Dies verringert deutlich die Produktivität der betroffenen Maschinen, und führt natürlich zu einem Anstieg der Betriebskosten pro gefertigtem Werkstück.

Fordervorrichtungen sind in US 2,971 630, FR 2509 703, DE 2343379 and WO 00/63077 beschrieben.

### Darstellung der Erfindung

Es ist daher eine Aufgabe der vorliegenden Erfindung, eine Fördervorrichtung sowie ein Förderverfahren zu entwickeln, die die genannten Probleme lösen und somit eine kontinuierliche Bearbeitung mit größtmöglicher Vorschubgeschwindigkeit seitens der Durchlaufmaschinen ermöglicht, und die mit hoher Geschwindigkeit auf die Fördervorrichtung auftretenden Werkstücke zwecks weiterer Bearbeitung mit geringerer Vorschubgeschwindigkeit oder getakteter Arbeitsweise abzubremsen. Hierbei ist es natürlich notwendig, eine Beschädigung der Werkstücke aufgrund des Abbremsens zu vermeiden.

Diese Aufgabe wird durch eine kombination gemäß Anspruch 1 und ein Verfahren gemäß Anspruch 10 gelöst. Hierdurch wird ein schrittweises Verringern der Vorschubgeschwindigkeit erreicht und somit eine Anpassung des Werkstück-Ausgangs der schneller arbeitenden Maschine an den Werkstücks-Eingang der langsamer arbeitenden Maschine erreicht, so dass beide Maschinen jeweils auf ihrer optimalen und größtmöglichen Geschwindigkeit arbeiten können. Somit kann die Werkstückbearbeitung mit der größtmöglichen Effizienz und Kostenersparnis durchgeführt werden.

Vorteilhafterweise ist die Förderebene jedes Förderbandes, dessen Vorschubgeschwindigkeit kleiner als die Vorschubgeschwindigkeit des unmittelbar davor gelegenen Förderbandes ist, in Bezug auf die Förderebene des unmittelbar davor gelegenen Förderbandes tiefer gelegt . Im Falle, dass das folgende Förderband tiefer liegt als das vorangegangene, fallen auf diese Weise die beförderten Werkstücke am Ende vom Ende des höheren Bandes auf das tieferliegende Band und können, je nach Abstand zwischen aufeinanderfolgenden Werkstücken, entweder einander angenähert oder teilweise überlappend auf dem tiefer liegenden Förderband zuliegen kommen. Hierdurch ist es möglich die Werkstücke weiter abzubremsen, ohne dass die Werkstücke an ihren in Vorschubrichtung gewandten Schmalseiten gegeneinander stoßen, was zu Schäden an den Kanten führen kann, und ohne dass die auf dem Förderband aufliegenden Oberflächen der Werkstücke durch Reibung gebremst und unter Umständen verdreht werden, die aufgrund der unterschiedlichen Vorschubgeschwindigkeiten des vom vorangehenden Band kommenden Werkstücks und des nachfolgenden Bandes entsteht.

Hierbei ist es besonders bevorzugt, dass die Förderbänder geeignet sind, die Platten nach dem Transport von einem Förderband zum nächsten in aufgefächerter Anordnung zu halten. Diese gefächerte Überlappung, in welcher die Werkstücke zu liegen kommen, stellt sicher, dass die Werkstücke auch bei sehr starkem Abbremsen der Vorschubgeschwindigkeit durch die Fördervorrichtung nicht beschädigt werden, da ein Rutschen des auftreffenden Werkstücks durch die Aufwärtsneigung des vorangehenden, aufgefächerten Werkstücks schnell gebremst wird und der Stoß des Auftreffens auf die große Auflagefläche des Werkstücks verteilt wird. Außerdem wird die vorhandene Transportstrecke besser ausgenützt, da bei gleicher Transportstrecke durch die Auffächerung mehr Werkstücke befördert werden können.

Das Eingangsförderband ist an den Ausgang einer Durchlauf-Holzbearbeitungsmaschine angeschlossen und seine Vorschubgeschwindigkeit ist vorteilhafterweise an die Vorschubgeschwindigkeit der Durchlaufmaschine anpassbar. Das Anschließen umfasst sowohl die korrekte Ausrichtung der jeweiligen Förderrichtungen als auch eine korrekte Höheneinstellung von Eingangsförderband und Förderband der Bearbeitungsmaschine. Somit wird die Fördervorrichtung geeignet mit einer vorangehenden Bearbeitungsmaschine verbunden und ein reibungsloser Übergang auf die Fördervorrichtung erreicht.

Bevorzugt gibt das letzte Förderband die Werkstücke an ein Stapelmagazin einer Maschine zur weiteren Querbearbeitung ab. Hier fallen die Platten am Ende des letzten Förderbandes geordnet auf ein Stapelmagazin, aus dem die Werkstücke dann zur weiteren Querbearbeitung entnommen werden. Die Fördervorrichtung kann somit sowohl eine nachfolgende kontinuierlich arbeitende Durchlaufmaschine, wie z.B. einen Doppelendprofiler, als auch eine nachfolgende, getaktete Bearbeitungsmaschine mit Werkstücken versorgen, die aus einer kontinuierlich arbeitenden Bearbeitungsmaschine kommen.

Eine vorteilhafte Ausgestaltung ist es, wenn ein oder mehrere Förderbänder eine Kurve aufweisen. Dadurch kann auf einfache Weise einerseits eine Richtungsumlenkung der Werkstücke erfolgen und andererseits die Werkstücke nach einer Längsbearbeitung zur weiteren Querbearbeitung bereits gedreht werden, z.B. um 90°. Alternativ kann natürlich das Förderband gerade sein und die Maschine zur Querbearbeitung unter 90° zum Förderbandende angeordnet werden.

Besonders bevorzugt umfasst die Fördervorrichtung weiter Sensoren, die die Länge der Werkstücke sowie den Abstand zwischen aufeinander folgenden Werkstücken messen, und eine Steuerung, die auf Grundlage der gemessenen Länge und des gemessenen Abstandes die Vorschubgeschwindigkeiten so regelt, dass ein Werkstück das unmittelbar vor ihm liegende den Erfordernissen eines Benutzers entsprechend zwei- oder mehrlagig überlappt. Zwei- oder mehrlagig bedeutet in diesem Zusammenhang, dass ein gegebenes Werkstück von einem oder mehreren nachfolgenden Werkstücken fächerartig überlappt wird. Die Überlappung kann somit je nach verwendetem Werkstückmaterial, den zu erzielenden Endgeschwindigkeiten und dem erwünschten Materialdurchsatz gewählt werden.

Vorteilhafterweise ist direkt an und hinter dem Übergang von einem Förderband auf ein tieferliegendes Förderband ein Bremsmittel vorgesehen, das die Werkstücke im Flug bremst und deren Lage stabilisiert. Direkt an und hinter dem Übergang bedeutet in diesem Zusammenhang, dass das Bremsmittel erst dort anfängt und das Werkstück berühren kann, wo das Werkstück das vorangehende Förderband bereits verlassen hat und sich in freiem Flug befindet. Jedoch ist es möglich, dass das Bremsmittel bereits mit dem Werkstück in Kontakt kommt, bevor es das vorangehende Förderband vollständig verlassen hat, jedoch nicht zu einem solchen Ausmaß, dass es das Werkstück so stark abbremst, dass ein Zusammenstoß mit einem nachfolgenden Werkstück erfolgen kann oder der Flug des Werkstücks instabil wird (z.B. das Werkstück mit der Schmalseite nach unten herunterfällt). So kann das Bremsmittel zu einer zusätzlichen Bremsung und Anpassung an die Fördergeschwindigkeit des tieferliegenden Förderbands beitragen und gleichzeitig die Lage des in Flug befindlichen Werkstücks stabilisieren.

Schließlich ist es besonders vorteilhaft, wenn das Bremsmittel eine Bremsbürste ist. Dies verhindert Beschädigungen an den Werkstücken und ermöglicht eine Stabilisierung, selbst wenn die Fluglage des Werkstücks von der normalen Lage abweicht und es zu einer stoßartigen Berührung des Werkstücks mit der Bremsbürste kommt.

Die oben genannte Aufgabe wird weiter durch ein Förderverfahren nach Anspruch 10 gelöst. Weitere vorteilhafte Ausführungsformen ergeben sich aus den Unteransprüchen.

### Kurze Beschreibung der zeichnungen

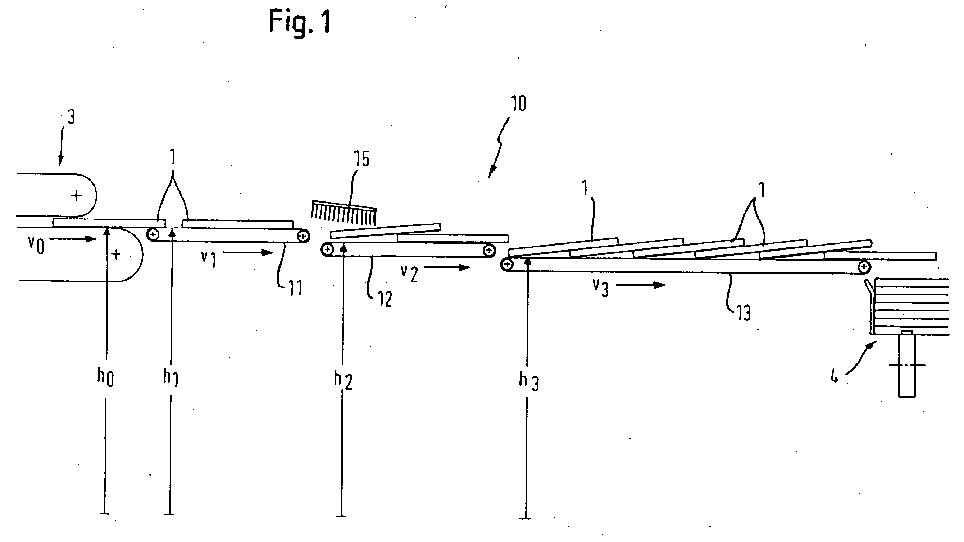

Fig. 1 stellt eine schematische Ansicht einer Fördervorrichtung entsprechend der Ausführungsform der Erfindung dar.

### Wege zur Ausführung der Erfindung

In Figur 1 ist eine Fördervorrichtung 10 dargestellt, die aus drei Förderbändern 11, 12 und 13 besteht. Das erste Förderband 11 ist das Eingangsförderband und ist an das Ende des Förderwegs einer Bearbeitungsmaschine 3, z.B. eines Doppelendprofilers, angeschlossen. Die Vorschubgeschwindigkeit v1 des Eingangsförderbands sowie die Höhe h1 seiner Förderebene sind den jeweiligen Werten der Bearbeitungsmaschine, v0 und h0, angepasst (z.B. vl=v0=300 m/min, h1=h0=1200 mm).

Das Förderband 12 hingegen weist eine in Bezug auf das Eingangsförderband geringere Geschwindigkeit v2 auf, nämlich vl>v2=200 m/min, sowie eine geringere Höhe seiner Förderebene h2, nämlich h1>h2=1150 mm. Gleiches gilt für das Förderband 13 in Bezug auf das Förderband 12, nämlich v2>v3=100 m/min und h2>h3=1100 mm.

Am Ende des dritten (letzten) Förderbandes 13 ist ein Schachtmagazin 4 für die plattenförmigen Werkstücke vorhanden, auf dem die Werkstücke vor der weiteren Querbearbeitung zwischengelagert werden.

Im Betrieb bewegen sich die Werkstücke folgendermaßen durch die Vorrichtung. Ein aus der Bearbeitungsvorrichtung 3 austretendes Werkstück 1 mit hoher Geschwindigkeit v0 wird zunächst verzögerungslos und ohne Verrückungen oder Niveauunterschiede (h0=h1) vom Eingangsförderband 11 aufgenommen und mit der gleichen Geschwindigkeit vl=v0 weiter transportiert. Am Ende des Eingangsförderbandes verlässt das Werkstück das Band und befindet sich kurzzeitig in freiem Flug, bei dem es von der Bremsbürste 15 leicht abgebremst und eventuell Lage-korrigiert wird. Etwas verlangsamt trifft das Werkstück nun auf das zweite Förderband 12 auf, dessen Geschwindigkeit v2 kleiner als die Geschwindigkeit v1 des ersten Förderbandes ist. Befindet sich auf diesem Band bereits ein zuvor aufgetroffenes Werkstück, und ist der Abstand zwischen den Werkstücken klein genug, so kommt das nachfolgende Werkstück überlappend auf dem vorangegangenen Werkstück zu liegen. Mehrere Werkstücke können so auf einem Band eine Fächer-artige Anordnung annehmen.

Am Ende des zweiten Bandes fallen die Werkstücke dann wieder auf das nächste, dritte Band 13 herab, das mit einer noch geringeren Geschwindigkeit v3 läuft, v3<v2<v1. Die Werkstücke können wiederum von einer Bremsbürste (nicht gezeigt) vorgebremst und lage-korrigiert werden. Wieder kommen die Werkstücke fächerartig aufeinander zu liegen, werden aber nun wegen der weiter verringerten Vorschubgeschwindigkeit weiter zusammengeschoben. Wenn durch eine Steuerung (nicht gezeigt) eine entsprechend niedrige Vorschubgeschwindigkeit für das Förderband bestimmt wird, können sich auch mehrlagige (d.h. mehr als zweilagige) Überlappungen bilden. Im vorliegenden Ausführungsbeispiel ist jedoch die Überlappung auf den Bändern 12 und 13 nur zweilagig.

Vom dritten und letzten Band 13 werden dann die Werkstücke in das Schachtmagazin 4 fallengelassen, in welchem sie für die Weiterbearbeitung, z.B. eine Querbearbeitung, zwischengelagert werden. Auch hier können Mittel zum Bremsen und zur Lagekorrektur vorhanden sein.

## Patentansprüche

1. Kombination aus einer Holzbearbeitungsdurchlaufmaschine und einer daran anschließenden Fördervorrichtung (10) für plattenförmige Werkstücke (1), umfassend ein Eingangsförderband (11) mit einer ersten Vorschubgeschwindigkeit (v1), sowie mehrere sich daran in Reihe anschließende Förderbänder (12, 13), wobei die Vorschubgeschwindigkeit (v2, v3) jedes Förderbands kleiner der Vorschubgeschwindigkeit (v1, v2) des unmittelbar davor gelegenen Förderbandes (11, 12) ist.

2. Kombination (10) nach Anspruch 1, wobei die Förderebene jedes Förderbandes, dessen Vorschubgeschwindigkeit kleiner als die Vorschubgeschwindigkeit des unmittelbar davor gelegenen Förderbandes ist, in Bezug auf die Förderebene des unmittelbar davor gelegenen Förderbandes tiefer gelegt ist.

3. Kombination (10) nach Anspruch 1 oder 2, wobei die Förderbänder geeignet sind, die Platten nach dem Transport von einem Förderband zum nächsten in aufgefächerter Anordnung zu halten.

4. Kombination (10) nach Anspruch 1,2 oder 3, wobei die Vorschubgeschwindigkeit (v1) des ersten Förderbandes an die Vorschubgeschwindigkeit (v0) der Durchlaufmaschine anpassbar ist.

5. Kombination (10) nach einem der Ansprüche 1 bis 4, wobei das letzte Förderband die Platten an ein Stapelmagazin einer Maschine zur weiteren Querbearbeitung abgibt.

6. Kombination (10) nach einem der vorangegangenen Ansprüche, wobei ein oder mehrere Förderbänder eine Kurve aufweisen.

7. Kombination (10) nach Anspruch 3, weiter Sensoren, die die Länge der Werkstücke sowie den Abstand zwischen aufeinander folgenden Werkstücken messen, und eine Steuerung umfassend, die auf Grundlage der gemessenen Länge und des gemessenen Abstandes die Vorschubgeschwindigkeiten so regelt, dass ein Werkstück das unmittelbar vor ihm liegende den Erfordernissen eines Benutzers entsprechend zwei- oder mehrlagig überlappt.

8. Kombination (10) nach einem der vorangegangenen Ansprüche, wobei direkt hinter dem Übergang von einem Förderband auf ein tieferliegendes Förderband ein Bremsmittel vorgesehen ist, das die Werkstücke im Flug bremst und deren Lage stabilisiert.

9. Kombination(10) nach Anspruch 8, wobei das Bremsmittel eine Bremsbürste ist.

10. Förderverfahren für aus einer Holzbearbeitungsdurchlaufmaschine kommende plattenförmige Werkstücke (1), umfassend die Schritte des Förderns mit einer ersten Vorschubgeschwindigkeit (v1), sowie mehrere sich daran in Reihe anschließende Förderschritte, wobei die Vorschubgeschwindigkeit (v2, v3) jedes Förderschritts kleiner der Vorschubgeschwindigkeit (v1, v2) des unmittelbar davor gelegenen Förderschritts ist.

11. Förderverfahren nach Anspruch 10, wobei die Förderebene der Werkstücke bei dem Förderschritt in Bezug auf die Förderebene des unmittelbar davor gelegenen Förderschritts tiefer gelegt wird.

## Claims

1. Combination of a continuous wood-processing machine and a conveying device (10) connected thereto for panel-like workpieces (1), comprising an inlet conveyer belt (11) at a first feed rate (v1), and several conveyer belts (12, 13) connected in series thereto, wherein the feed rate (v2, v3) of each conveyer belt is less than the feed rate (v1, v2) of the conveyer belt (11, 12) placed directly in front.

2. Combination (10) according to claim 1, wherein the conveying plane of each conveyer belt, the feed rate of which is less than the feed rate of the conveyer belt placed directly in front, is placed lower with reference to the conveying plane of the conveyer belt placed directly in front.

3. Combination (10) according to claim 1 or 2, wherein the conveyer belts are suitable for holding the panels in fanned-out arrangement after transport from one conveyer belt to the next.

4. Combination (10) according to claim 1, 2 or 3, wherein the feed rate (v1) of the first conveyer belt can be adapted to the feed rate (v0) of the continuous machine.

5. Combination (10) according to one of claims 1 to 4, wherein the last conveyer belt delivers the panels to a stacking magazine of a machine for further transverse processing.

6. Combination (10) according to one of the preceding claims, wherein one or more conveyer belts have a bend.

7. Combination (10) according to claim 3, also comprising sensors which measure the length of the workpieces and the distance between successive workpieces, and a control which regulates the feed rates on the basis of the measured length and the measured distance so that one workpiece overlaps the one lying directly in front of it, according to the requirements of a user, in double-layered or multi-layered manner.

8. Combination (10) according to one of the preceding claims, wherein a braking means, which brakes the workpieces in flight and stabilises their position, is provided directly behind the transition from one conveyer belt to a lower-lying conveyer belt.

9. Combination (10) according to claim 8, wherein the braking means is a braking brush.

10. Conveying process for panel-like workpieces (1) coming from a continuous wood-processing machine, comprising the steps of conveying at a first feed rate (v1), and several conveying steps connected in series thereto, wherein the feed rate (v2, v3) of each conveying step is less than the feed rate (v1, v2) of the conveying step placed directly in front.

11. Conveying process according to claim 10, wherein the conveying plane of the workpieces during the conveying step is placed lower with reference to the conveying plane of the conveying step placed directly in front.

## Revendications

1. Combinaison d'une machine d'usinage en continu du bois et d'un dispositif de transport (10) s'y raccordant, pour des pièces d'oeuvre (1) en forme de plaque, comprenant une bande transporteuse d'entrée (11), avec une première vitesse d'avancement (v1), ainsi que plusieurs bandes transporteuses (12, 13) s'y raccordant, en série, la vitesse d'avancement (v2, v3) de chaque bande transporteuse étant inférieure à la vitesse d'avancement (v1, v2) de la bande transporteuse (11, 12) disposée immédiatement précédemment.

2. Combinaison (10) selon la revendication 1, dans laquelle **caractérisée en ce que** le plan de transport de chaque bande transporteuse, dont la vitesse d'avancement est inférieure à la vitesse d'avancement de la bande transporteuse disposée immédiatement précédemment, est situé à un niveau inférieur, en se référant au plan de transport de la bande transporteuse disposée immédiatement précédemment.

3. Combinaison (10) selon la revendication 1 ou 2, dans laquelle les bandes transporteuses conviennent pour maintenir les plaques en un agencement déployé en éventail, après le transport d'une bande transporteuse à la suivante.

4. Combinaison (10) selon la revendication 1, 2 ou 3,
dans laquelle la vitesse d'avancement (v1) de la première bande transporteuse est adaptable à la vitesse d'avancement (v0) de la machine en continu.

5. Combinaison (10) selon l'une des revendications 1 à 4,
dans laquelle la dernière bande transporteuse délivre les plaques à un magasin à empilement d'une machine affectée à un usinage transversal supplémentaire.

6. Combinaison (10) selon l'une des revendications précédentes, dans laquelle une ou plusieurs bandes transporteuses présentent une courbe.

7. Combinaison (10) selon la revendication 3, comprenant en outre des capteurs, mesurant la longueur des pièces d'oeuvre ainsi que l'espacement entre des pièces d'oeuvre se suivant les unes les autres, et une commande, régulant les vitesses d'avancement d'après la longueur mesurée et l'espacement mesuré, de manière qu'une pièce d'oeuvre chevauche, en deux couches ou plus, celle se trouvant immédiatement avant elle, de manière correspondante aux exigences d'un utilisateur.

8. Combinaison (10) selon l'une des revendications précédentes, dans laquelle un moyen de freinage est prévu, directement après le passage d'une bande transporteuse à une bande transporteuse située plus bas, le moyen de freinage freinant au vol les pièces d'oeuvre et stabilisant leur position.

9. Combinaison (10) selon la revendication 8, dans laquelle le moyen de freinage est une brosse de freinage.

10. Procédé de transport pour des pièces d'oeuvre (1) en forme de plaque, provenant d'une machine d'usinage en continu du bois, comprenant les étapes du transport, à une première vitesse d'avancement (v1), ainsi que plusieurs étapes de transport s'y raccordant, en série, la vitesse d'avancement (v1) de chaque étape de transport étant inférieure à la vitesse d'avancement (v1, v2) de l'étape de transport disposée immédiatement précédemment.

11. Procédé de transport selon la revendication 10, dans lequel le plan de transport des pièces d'oeuvre, lors de l'étape de transport, est situé à un niveau inférieur, en se référant au plan de transport de l'étape de transport disposée immédiatement précédemment.
